# EUROPEAN PATENT SPECIFICATION

(11) **EP 0 851 008 B1**
(45) Date of publication and mention of the grant of the patent: **06.05.2004**
(21) Application number: 97500206.4
(22) Date of filing: 25.11.1997
(51) Int. Cl.: C09D 5/14, A01N 25/10, A01N 25/24

(54) **Paints inhibiting the chitin synthesis in arthropods, for the control of pests and allergens**
Anstriche inhibierend die Chitinsynthese in Arthropoden zur Bekämpfung von Schädlingen und Allergenen
Peintures inhibitrices de la synthèse de la chitine dans les arthropodes en vue de lutter contre les parasites et les allergènes

(30) Priority: 23.12.1996 ES 9602723
(43) Date of publication of application: 01.07.1998
(73) Proprietor: Mateo Herrero, Maria Pilar, 45007 Valencia (ES)
(72) Inventor: Mateo Herrero, Maria Pilar, 45007 Valencia (ES)
(74) Representative: Manzano Cantos, Gregorio

(56) References cited:
- DE-A- 4 303 012
- DE-A- 4 328 074
- DE-A- 4 409 040
- CIBA GEIGY AG: "VERWENDUNG DES INSEKTIZIDS FENOXYCARB IN HOLZSCHUTZMITTELN USE OF FENOXYCARB AS A WOOD PRESERVATIVE" RESEARCH DISCLOSURE, vol. 338, no. 048, 1 June 1992, page 461 XP000315668 Emsworth GB
- DATABASE WPI Section Ch, Week 9442 Derwent Publications Ltd., London, GB; Class A82, AN 94-339014 XP002079468 & KR 9 311 152 B (KOREA CHEM CO LTD) , 24 November 1993
- PATENT ABSTRACTS OF JAPAN vol. 018, no. 107 (C-1169), 22 February 1994 & JP 05 301801 A (SUMITOMO CHEM CO LTD), 16 November 1993
- PATENT ABSTRACTS OF JAPAN vol. 018, no. 140 (C-1177), 8 March 1994 & JP 05 320001 A (SUMITOMO CHEM CO LTD), 3 December 1993
- DATABASE WPI Section Ch, Week 8817 Derwent Publications Ltd., London, GB; Class A18, AN 88-115476 XP002079469 & JP 63 061063 A (SUMITOMO SHOJI KK) , 17 March 1988

## Description

This invention refers to the composition of a non-toxic paint which inhibits the synthesis of chitin in arthropods (insects and mites), in all the stages of their biological cycle (larva, nymph, adult), acting simultaneously as a sterilizing agent for adult females and also being possible to apply it, in the usual manner, as a paint used for decoration.

More specifically, the invention refers to a composition which comprises resin, pigment fillers and active compounds which are microencapsulated in the resin polymer itself during the manufacturing process, which allows it to be a residual product for arthropods.

Some paints with insecticidal properties are known in the prior art, corresponding to patents: EP 0 235, 584 (Artilin) for: "Vernis et peintures pesticides-acaricides"; CA 1 291 296 (Pujorowski ) for: "Pesticide-acaricide varnishes and paints"; FR 8 601 516 (publication number 2 593 821) (Sogeref-Artilin) for: "Vernis et peinture pesticides-acaricides " and US Patent US 5,931,994 of the same inventor for: "Paint compositions with insecticidal and anti-arthropodicidal properties for controlling pests and allergens by inhibiting chitin synthesis".

Regarding D1 patent document DE 43 03 012 A (Desowag Materialschuntz GmbH), its descriptive content, either informally or as a reference, mentions the intervention of products such as water, a chitin inhibitor, organophosphates, a resin, pigments, fillers and stabilizers, but they are not related to nor do they intervene in the same or analogous composition which is proposed by this invention in an original and proper manner.

The active compounds of these are some of the active compounds which are constituents of the same, which are today prohibited products in the EU, such as the use of organochlorides. In relation to the latter it has been demonstrated that they are toxic to warm blooded animals and that they are harmful for ecosystems.

There are some paints in the market, the formulation of which is based on the traditional pyrethroids, but these active compounds do not convey a residual character, as they have an immediate action and little effectiveness as time goes by, considering that they are degraded in the environment. That is, these are paints with a low index of photostability.

The present invention provides a novel form of controlling arthropods, and above all, it is the most effective non-toxic method for the control, in a residual manner, of pests responsible for the transmission of endemic diseases such as Malaria, Paludism and other more common diseases, which are very widespread in modern societies, such as allergies.

It is a novel product, designed to protect the home of human beings and to protect animals against arthropods, presented in the form of a matte plastic paint which is easy to apply and to clean, and which is odorless and totally atoxic, non-irritating and with negative mutation indices. Its anti-arthropodal properties have a very long-lasting residual action.

More particularly, the present invention endeavors to act by inhibiting the synthesis of chitin in arthropod species (insects and mites), in combination with a great selectivity in relation to the ecosystem. The paint acts as an acaricidal, bactericidal, fungicidal and insecticidal disinfectant, and also as a chemical sterilizing agent for susceptible mites (adult females). Due to its composition, the product acts by contact, ingestion contact, vapour action and inhibitor of the chitin, as a regulator of growth.

In interior environments, it controls: flies, mosquitoes, spiders, mites, cockroaches, ants, bedbugs, lice, moths and other arthropods.

In the case of exterior environment, it is specially designed and developed to prevent and control the formation of spider webs and the proliferation of insects under eaves and protrusions of roofs, and other points of penetration for these animals.

It has an excellent resistance to weathering and atmospheric agents. It can be applied on any kind of material (concrete, iron, wood, prefabricated materials, etc.) but it is specially indicated for the control of insects coming through walls and roofs, whichever material they may be made of.

This is a simple and healthy way of controlling insects and mites. It is very effective against those insects which hide and lay their eggs in the cracks, crevices and rough areas of walls.

The combination of a small percentage of organophosphate compounds with chitin inhibitors, together with the microencapsulation with the polymer, conveys it with greater effectiveness and residual potency. This combination has the following formula:

| | FROM | TO |
|---|---|---|
| Water | 10% | 40% |
| Chitin inhibitor | 0.001% | 40% |
| Organophosphates | 0.001% | 5% |
| Resin (vinyl or acrylic) | 5% | 50% |
| Pigments | 1% | 40% |
| Fillers (calcium carbonate) | 1% | 60% |
| Stabilizers | 1% | 20% |

All the percentages are expressed as weight by total weight of the composition, being it possible to combine any possible variation of the same within the different percentages established.

Chitin inhibitors are comprised within the group of the so called growth regulating insecticides, G.R.I., which have the following mechanism of action. Insects are covered by a rigid exoskeleton, the tegmentum, which provides them with protection and prevents water loss, which in turn also permits their own survival.

In order for the insects to be able to develop, and as a consequence of the previously mentioned tegmentum, they must grow in a discontinuous fashion.

In order to do this, they periodically shed their tegmentum and create a new one which is larger in size. This process is known as molting.

The application of the active compounds used in the paint (and in the concentrate) gives rise to a process which is capable of inhibiting the mechanism of chitin production.

Chitin is the major component of the aforementioned tegmentum. When its synthesis is prevented, the formation of a new tegmentum is blocked and, as a consequence of this, the molting process does not take place and, therefore, the development of the animal and its sole existence becomes non-viable.

The activity of the product can be seen in all the stages of the sensitive insects, although in different forms.

It affects the eggs of some species when these are laid on the outer surface of treated plants, or when the same are treated after being laid. The eggs are capable of developing, but the larvae originating from the same are incapable of emerging or die shortly afterwards.

It affects the larval stages by preventing molting, which gives rise to symptoms such as double cephalic capsule, swelling of the thorax and displaced or deformed mandibles.

As a consequence of the impossibility to molt, larvae die because they are incapable of evolving into the subsequent stages. Also, due to the previously mentioned malformations, they cannot feed and their survival becomes impossible.

The mortality is not rapid, but feeding ceases soon after the larvae ingest the product, and consequently, their harmful effects stop virtually after intake of the product.

The larvae exposed to sub-lethal doses of the products may "pupate", but they will either not produce viable adults or they will give rise to adults which lay fewer eggs than normal.

The larvae of the last stage may turn into pupae but they de not emerge as adults.

It affects adults reducing their fertility and their fecundity.

The product acts as chitin inhibitor by contact and ingestion as a regulator of growth.

Among other chitin inhibitors, some of the most remarkable ones are given hereunder: Flufenoxuron, fenoxycarb, hexythiazox, diflubenzuron, hexaflumuron, triflumuron, hidroprene.

All the components of the composition are commercially available products or they are easily obtainable by known methods.

The usual stabilizers used in plastic paints, such as sodium benzoate, sodium hexametaphosphate, sodium nitrite, etc. are employed.

All the pertinent toxicity and effectiveness tests have been carried out on the product with great success.

The organophosphates will be of the Ethyl chlorpyriphos, or, o-diethyl and 0-(3, 5, 6-trichloro-2-pyridyl) thiophosphate, or, o-diethyl 0-(2-Isopropyl-6-methyl-pyrimidin-4-yl) Phosphorothioate type, which are wide-spectrum acaricides-insecticides, belonging to the organophosphates are solute from the list of the a which are active by ingestion, contact and inhalation, due to their vapour action. They have a very reduced systematic activity, but due to their volatility, they may give rise to insecticide wastes in surfaces which are close to the area of treatment.

These organophosphates are technical grade products employed in the formulation of insecticides, for use in Environmental Health and Food Hygiene, and which, applied in very diverse forms, are active against a great variety of pests, among which it is worth mentioning: mosquitoes, flies, beetles, ants, cockroaches and mites. When properly applied, they provide great persistence in their effects, which can even last for a year.

Regarding the other constituents, the pigment is titanium dioxide. The filler is calcium carbonate. The resin is acrylic or vinyl based emulsions.

## Claims

1. Microencapsulated paints inhibiting chitin synthesis in arthropods, for the control of pests and allergens, comprising the formula:
| | FROM | TO |
|---|---|---|
| Water | 10% | 40% |
| Chitin inhibitor | 0.001% | 40% |
| Organophosphates | 0.001% | 5% |
| Resin | 5% | 50% |
| Pigments | 1% | 40% |
| Fillers | 1% | 60% |
| Stabilizers | 1% | 20% |
Wherein all percentages are expressed as weight percentages, based on the total weight of the composition, and the resin is selected from vinyl or acrylic, and the filler is selected from calcium carbonate or silica, wherein the active compounds are micro-encapsulated in the resin polymer.

2. Paints according to claim 1, wherein the chitin inhibitor is selected from the group consisting of, flufenoxuron, fenoxycarb, hexythiazox, diflubenzuron, hexaflumuron, triflumuron and hydroprene.

3. Paints according to claim 1, wherein the organophosphates employed are enthyl chlorpyriphos, or o-diethyl thiophosphate o-(3,5,6-trichloro-2-pyridyl), or, o-diethyl o-(2-Isopropyl-6-methyl-4-pyrimidinyl) phosphorothioate

4. Paints according to claim 1, wherein the pigment is titanium dioxide.

5. Paints according to claim 1, wherein the filler is a calcium carbonate.

6. Paints according to claim 1, wherein the stabilizers are selected from the group comprising sodium benzoate, sodium hexametaphosphate and sodium nitrite.

## Patentansprüche

1. Mikroverkapselte Lösungen, welche die Chitinsynthese in Arthropoden hemmen, für die Kontrolle von Seuchen und Allergenen, welche die Formel:
| | von | bis |
|---|---|---|
| Wasser | 10% | 40% |
| Chitinhemmer | 0,001% | 40% |
| Organophosphate | 0,001% | 5% |
| Harz | 5% | 50% |
| Pigmente | 1% | 40% |
| Füllstoff | 1% | 60% |
| Stabilisatoren | 1% | 20% |
umfassen, wobei alle Anteile als Gewichtsprozente in Bezug auf das Gesamtgewicht der Mischung angegeben sind und das Harz aus Vinyl- oder Acrylharz ausgewählt wird, und das Füllstoff aus Calciumcarbonat oder Kieselerde ausgewählt wird, wobei die Wirkstoffe in das Polymerharz mikroverkapselt sind.

2. Lösungen nach Anspruch 1, wobei der Chitinhemmer aus der Gruppe gebildet aus Flufenoxuron, Fenoxycarb, Hexythiazox, Diflubenzuron, Hexaflumuron, Triflumuron und Hydropren ausgewählt wird.

3. Lösungen nach Anspruch 1, wobei die verwendeten Organophosphate Chlorpyriphos-ethyl oder O-Diethyl-O-3,5,6-trichlor-2-pyridyl-thiophosphat oder O-Diethyl-O-(2-isopropyl-6-methylpyrimidin-4-yl)phosphorthioat sind.

4. Lösungen nach Anspruch 1, wobei das Pigment Titandioxid ist.

5. Lösungen nach Anspruch 1, wobei das Füllstoff ein Calciumcarbonat ist.

6. Lösungen nach Anspruch 1, wobei die Stabilisatoren aus der Gruppe gebildet aus Natriumbenzoat, Natriumhexametaphosphat und Natriumnitrit ausgewählt werden.

## Revendications

1. Solutions micro-encapsulées qui inhibent la synthèse de la chitine chez les arthropodes, pour le contrôle des épidémies et des allergènes, qui comprennent le formule:
| | DEPUIS | JUSQUE |
|---|---|---|
| Eau | 10% | 40% |
| Inhibiteur de la chitine | 0,001 % | 40% |
| Organo-phosphates | 0,001 % | 5% |
| Résine | 5% | 50% |
| Pigments | 1% | 40% |
| Matériel de charge | 1% | 60% |
| Stabilisants | 1 % | 20% |
Dans laquelle tous les pourcentages sont exprimés en pourcentages en poids, en référence au poids total de la composition, et la résine est sélectionnée entre le vinyle ou l'acrylique, et le matériel de charge est sélectionné entre le carbonate calcique ou la silice, dans lesquels les principes actifs sont microencapsulés dans la résine polymérique.

2. Solutions selon la revendication 1, dans lesquelles l'inhibiteur de la chitine est sélectionné parmi le groupe qui consiste en flufenoxuron, fenoxycarb, hexythiazox, diflubenzuron, hexaflumuron, triflumuron et hydroprène.

3. Solutions selon la revendication 1, dans lesquelles les organophosphates utilisés sont le chlorpyriphos éthyle, ou le o-(3,5,6-trichloro-2-pyridyl)thiophosphate de o-diéthyle, ou, le o-(2-isopropyl-6-méthyl-4-pyrimydinyl)phosphorothioate de o-diéthyle.

4. Solutions selon la revendication 1, dans lesquelles le pigment est le dioxyde de titanium.

5. Solutions selon la revendication 1, dans lesquelles le matériel de charge est un carbonate calcique.

6. Solutions selon la revendication 1, dans lesquelles les stabilisants sont sélectionnés parmi un groupe qui comprend le benzoate de sodium, l'hexamétaphosphate de sodium et le nitrite de sodium.
